# EUROPÄISCHE PATENTSCHRIFT

(11) **EP 0 707 176 B1**
(45) Veröffentlichungstag und Bekanntmachung des Hinweises auf die Patenterteilung: **19.01.2000**
(21) Anmeldenummer: 95115845.0
(22) Anmeldetag: 09.10.1995
(51) Int. Cl.: F23L 11/00

(54) **Spannhebelklappe, insbesondere für grosse Leitungsquerschnitte**
Tension lever flap valve for conduits having large cross-section
Dispositif d'obturation avec levier de serrage pour conduites avec grande section transversale

(30) Priorität: 13.10.1994 DE 4436569
(43) Veröffentlichungstag der Anmeldung: 17.04.1996
(73) Patentinhaber: HERMANN RAPPOLD U.CO.GMBH, D-52353 Düren (DE)
(72) Erfinder: Kremers, Karl-Josef, D-52385 Nideggen (DE); Ormanns, Bernd, D-52353 Düren (DE); Schawag, Wolfgang, D-46537 Dinslaken (DE)
(74) Vertreter: KEIL & SCHAAFHAUSEN Patentanwälte

(56) Entgegenhaltungen:
- WO-A-92/08056
- CA-A- 1 260 356
- US-A- 4 919 169
- US-A- 5 186 205

## Beschreibung

Die Erfindung betrifft eine Spannhebelklappe, insbesondere für große Leitungsquerschnitte, mit einem mit Leitungsanschlüssen versehenen Klappengehäuse und einem darin zwischen zwei Endschaltstellungen in einem Schwenkwinkelbereich von ca. 90° schwenkbaren Klappenflügel, der über eine Antriebswelle, einen daraufsitzenden Spannhebel und eine einerseits mit dem Spannhebel und andererseits annähernd mittig mit dem Klappenflügel gelenkig verbundene Gelenkstange antreibbar ist.

Spannhebelklappen dieser Art finden bekanntlich Anwendung in Rauchgas-Reinigungs- und Gasturbinenanlagen, weil sie zum einen die Betätigung des Klappenflügels mit einem günstigen Drehmoment ermöglichen und zum anderen den verhältnismäßig weit ausladenden Klappenflügel annähernd mittig abfangen.

Der Spannhebelmechanismus wird im allgemeinen durch Elektroantriebe, Doppelzylinderkolben-Schwenkantriebe oder aber durch mehrere ZylinderKolbeneinheiten, die über spezielle Ventilanordnungen in beiden Schwenkrichtungen gesteuert werden, angetrieben. Eine Spannhebelklappe mit Elektroantrieb ist in der DE-OS 38 13 663 geoffenbart. Ein Doppelzylinderkolben-Schwenkantrieb ist in der DE-OS 42 39 423 beschrieben. Einen Spannklappenantrieb bestehend aus zwei Zylinderkolbeneinheiten mit dazugehörigen Steuerventilen zeigt die DE-PS 40 33 663.

Die vorgenannten Antriebssysteme sind zwar in der Lage, den Klappenflügel über den gesamten Schwenkwinkel mit dem erforderlichen Drehmoment zu betätigen und dabei den bei den vorbekannten Spannhebelklappen vorgesehenen Drehwinkel β des Spannhebels zwischen ca. 170° und 210° zu verfahren. Sie haben jedoch im einzelnen erhebliche Nachteile. Elektroantriebe arbeiten verhältnismäßig langsam und sind kostspielig in der Anschaffung. Doppelzylinderkolben-Schwenkantriebe oder Zylinderkolbeneinheiten, die über spezielle Ventilanordnungen gesteuert werden, sind ebenfalls kostspielig und außerdem störanfällig.

Ähnliche Spannhebelklappen mit motorigem Antrieb und ebenfalls verhältnismäßig großem Drehwinkel β, deren Antriebswelle in der Mitte des Leitungsquerschnitts gelagert ist, sind in der US-PS 4,919,169 und in der US-PS 5,186,205 geoffenbart.

Der Erfindung liegt die Aufgabe zugrunde, diese Nachteile zu beheben und eine Spannhebelklappe der eingangs genannten Art zu schaffen, die mit einem konstruktiv und steuerungstechnisch möglichst einfachen Zylinder-Kolbenantrieb betriebssicher, störungsfrei und mit verhältnismäßig kurzen Schaltzeiten antreibbar ist.

Diese Aufgabe wird erfindungsgemäß dadurch gelöst, daß die Drehachse der Antriebswelle bzw. des Spannhebels soweit von der Mitte des Leitungsquerschnitts des Leitungsanschlusses, den der Klappenflügel in der Endschaltstellung mit eingefahrenem Spannhebel verschließt, in Richtung zur Schwenkachse des Klappenflügels hin versetzt ist, daß der Drehwinkel β des Spannhebels zwischen den beiden Endschaltstellungen des Klappenflügels zwischen 90° und 150° beträgt.

Die Begrenzung des Drehwinkels β auf den angegebenen Winkelbereich ermöglicht es, den Spannhebel mit einer einzigen Zylinder-Kolbeneinheit anzutreiben, weil deren Arbeitshub zum Verfahren des erfindungsgemäß vorgesehenen Drehwinkelbereiches zwischen 90° und 150° ausreichend ist. Ein solcher Antrieb ist bekanntlich sehr robust und läßt sich mit denkbar einfachen Steuermitteln schnell umschalten. Dadurch ist die weitgehende Störungsfreiheit des Systems gewährleistet. Aufgrund der sich dabei ergebenden Drehmomenten auf der Antriebswelle wird erfindungsgemäß ein Drehwinkel β des Spannhebels zwischen 125° und 130° bevorzugt.

Um diese Drehwinkelwerte zu erreichen, sieht die Erfindung vor, den Abstand zwischen der Drehachse des Spannhebels und der Schwenkachse des Klappenflügels so zu bemessen, daß er ca. 1/6 der lichten Weite des Leitungsquerschnittes beträgt. Diese simple konstruktive Maßnahme ermöglicht es, den Drehwinkel des Spannhebels erfindungsgemäß auf die vorstehend angegebenen Drehwinkelwerte zu beschränken, ohne daß die erforderlichen Drehmomente auf der Antriebswelle in nennenswertem Umfang höher werden.

Aus konstruktiven Gründen ist es im Rahmen der Erfindung vorteilhaft, wenn der Spannhebel und die Gelenkstange annähernd die gleiche Länge aufweisen, so daß bei eingefahrenem Hebelsystem der Spannhebel und die Gelenkstange zur Mittelsenkrechten annähernd den gleichen Winkel α 1 = α 2 bilden.

Es ist jedoch auch im Rahmen der Erfindung möglich, den Spannhebel länger als die Gelenkstange zu bemessen. Diese Maßnahme trägt dazu bei, den Drehwinkel β des Spannhebels zwischen den beiden Endschaltstellungen weiter zu verringern und kommt je nach Betriebsbedingungen dann in Frage, wenn ein etwas höheres Drehmoment zur Betätigung des Klappenflügels in Kauf genommen werden kann.

Die erfindungsgemäßen Maßnahmen ermöglichen die Verwendung eines Zylinderkolbenaggregats bestehend aus zwei parallelzueinander liegenden, synchron arbeitenden Zylinderkolben-Einheiten, die gegenläufig auf einen auf der Antriebswelle sitzenden doppelarmigen Hebel angreifen. Auf diese Weise ist es möglich, die Antriebswelle biegemomentfrei anzutreiben.

Es ist jedoch selbstverständlich gemäß der Erfindung ebenfalls möglich, die Antriebswelle durch eine einzige Zylinder-Kolben-Einheit über einen auf der Antriebswelle sitzenden einseitigen Hebel anzutreiben, weil der Arbeitshub der Zylinder-Kolben-Einheit zum Verfahren des erfindungsgemäßen Drehwinkels β ausreichend ist.

Nachfolgend werden zwei Ausführungsbeispiele der erfindungsgemäßen Spannhebelklappe näher beschrieben.

Es zeigen:
- Fig. 1: eine Spannhebelklappe mit gleichlangem Spannhebel und Gelenkstange, im Längsschnitt dargestellt,
- Fig. 2: das Antriebsaggregat für die Spannhebelklappe nach Fig. 1, in der Vorderansicht dargestellt, und
- Fig. 3: eine Variante der Spannhebelklappe nach Fig. 1, deren Spannhebel länger als die Gelenkstange bemessen ist.

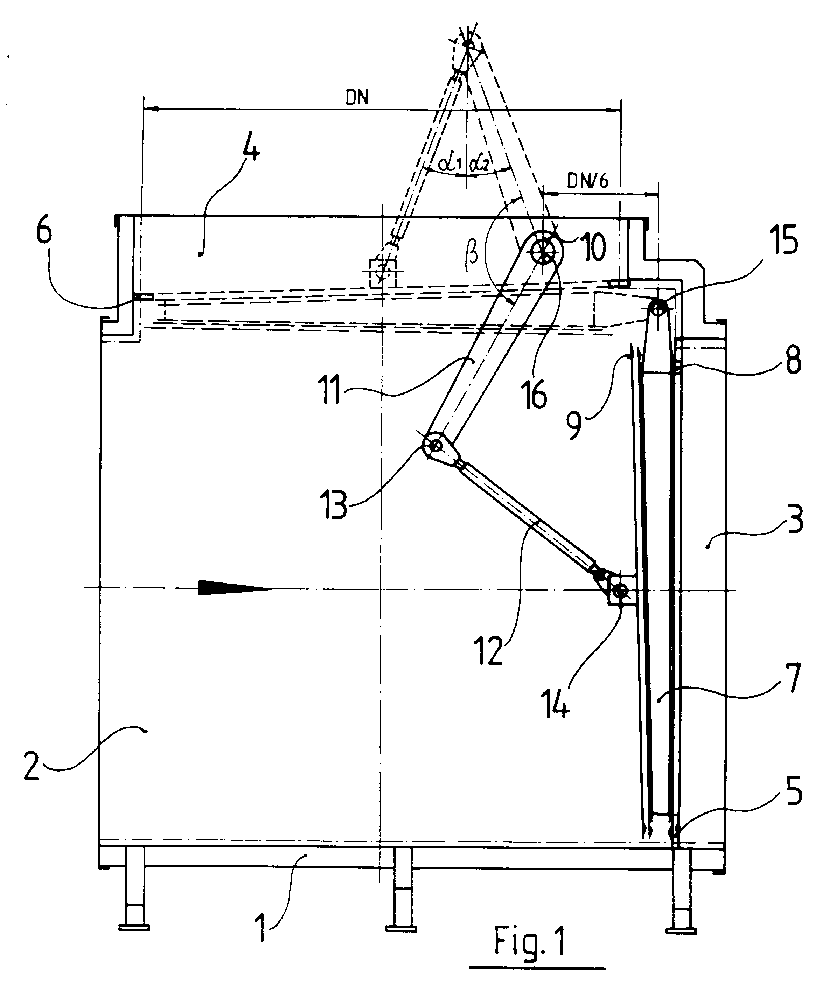

Die Spannhebelklappe gemäß Fig. 1 besteht aus einem Klappengehäuse 1 mit drei Leitungsanschlüssen 2, 3 und 4, von denen die Leitungsanschlüsse 3 und 4 mit Dichtsitzen 5 bzw. 6 versehen sind.

Im Klappengehäuse 1 ist ein Klappenflügel 7 mit Dichtelementen 8 und 9 in einem Schwenkwinkelbereich von ca. 90° zwischen zwei Endschaltstellungen schwenkbar, in denen die Dichtelemente 8, 9 des Klappenflügels 7 gegen die Dichtsitze 5 bzw. 6 des Klappengehäuses 1 angedrückt sind.

Der Klappenflügel 7 ist über eine Antriebswelle 10, einen daraufsitzenden Spannhebel 11 und eine Gelenkstange 12 antreibbar. Die Gelenkstange 12 ist an dem einen Ende 13 mit dem Spannhebel 11 und an dem anderen Ende 14 annähernd mittig mit dem Klappenflügel 7 gelenkig verbunden. Die Schwenkachse 15 des Klappenflügels 7 ist zwischen den beiden Leitungsanschlüssen 3 und 4 am Außenrand des Klappenflügels 7 angeordnet. Die Antriebswelle 10 ist im Bereich des Leitungsanschlusses 4 so gelagert, daß der Abstand zwischen der Drehachse 16 der Antriebswelle 10 und der Schwenkachse 15 des Klappenflügels 7 ca. 1/6 der lichten Nennweite DN des Leitungsquerschnitts beträgt. Die Lagerung der Antriebswelle 10 ist kurz oberhalb der Ebene des Dichtsitzes 6 angeordnet. In der gestrichelt dargestellten Endschaltstellung mit eingefahrenem Spannhebel liegen die Drehachse 16 der Antriebswelle 10 und die Gelenkachse 14 der Gelenkstange 12 von der Ebene des Dichtsitzes 6 annähernd gleich entfernt.

Der Spanhebel 11 und die Gelenkstange 12 weisen annähernd die gleiche Länge auf, so daß bei eingefahrenem Hebelsystem der Spannhebel 11 und die Gelenkstange 12 zur Mittelsenkrechten annähernd den gleichen Winkel α 1 = α 2 bilden.

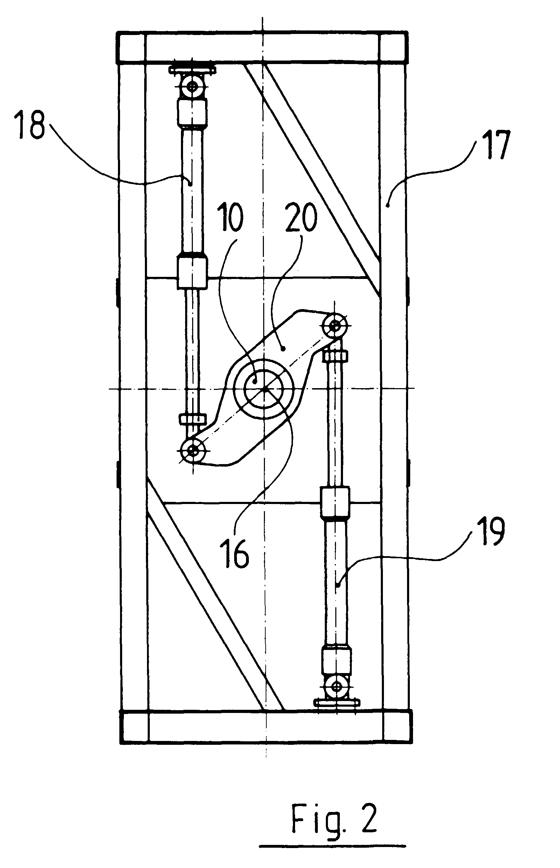

Die Antriebswelle 10 wird mit Hilfe des in Figur 2 dargestellten Antriebsaggregaten angetrieben. Dieses besteht aus einem Rahmen 17 und zwei daran gelenkig befestigten Zylinderkolben-Einheiten 18 und 19, die im Rahmen 17 parallel zueinanderliegend angeordnet sind und deren Kolbenstangen an je einem Hebelarm eines doppelarmigen Antriebshebels 20 angreifen, welcher auf der Antriebswelle 10 drehfest sitzt. Die beiden Zylinderkolben-Einheiten 18, 19 arbeiten synchron und gegenläufig. Ihr Arbeitshub ist so bemessen, daß der doppelarmige Antriebshebel 20 durch jede der Zylinderkolben-Einheiten 18, 19 um einen Drehwinkel β von ca. 125° bzw. 130° drehbar ist. Hierbei wird die Antriebswelle 10 aufgrund der synchron und gegenläufig arbeitenden Zylinderkolben-Einheiten 18, 19 biegemomentfrei angetrieben.

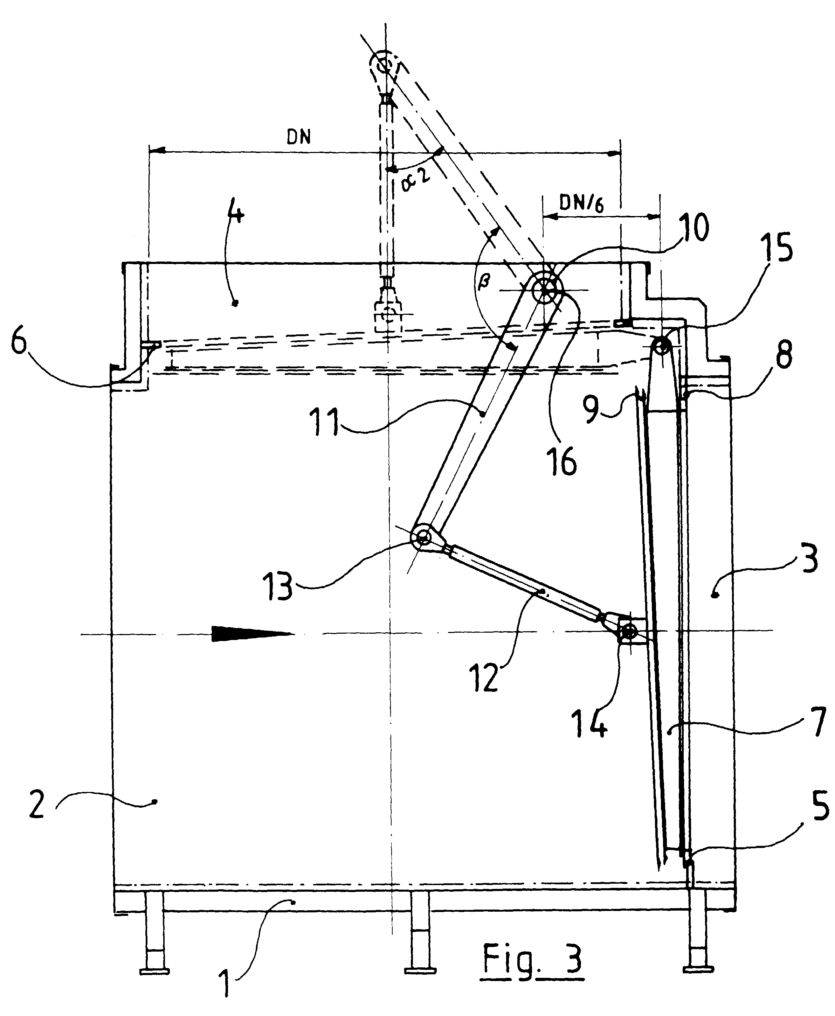

Die Spannhebelklappe nach Figur 3 unterscheidet sich von der Spannhebelklappe nach Figur 1 lediglich dadurch, daß der Spannhebel 11 und die Gelenkstange 12 eine unterschiedliche Länge aufweisen, wobei der Spannhebel 11 länger als die Gelenkstange 12 ist. Der Längenunterschied zwischen dem Spannhebel 11 und der Gelenkstange 12 ist so bemessen, daß in der einen Endschaltstellung bei eingefahrenem Hebelsystem die Gelenkstange 12 weitgehend mit der Senkrechten zusammenfällt (α₁ = 0), während der Spannhebel 11 zur Senkrechten einen Winkel α 2 bildet, der größer als der Winkel α 2 in Figur 1 bemessen ist.

Aufgrund der gewählten Baulänge von Spannhebel 11 und Gelenkstange 12 ergibt sich im Zusammenwirken mit dem gegenüber der Ausbildung nach Figur 1 unverändert gebliebenen Abstand zwischen der Drehachse 16 des Spannhebels 11 und der Schwenkachse 15 des Klappenflügels 7 einen Drehwinkel β des Spannhebels 11, der ca. 110° bis 115° beträgt und somit kleiner als der Drehwinkel von ca. 125° bis 130° bei der Spannhebelklappe gemäß Figur 1 bemessen ist. Daraus resultiert eine weitere Vereinfachung des Antriebes, weil die Zylinderkolben-Einheiten 18, 19 einen noch kürzenen Arbeitshub aufweisen können. Hierbei kann man die gegebenenfalls damit einhergehende Erhöhung des erforderlichen maximalen Drehmomentes leicht verkraften.

## Patentansprüche

1. Spannhebelklappe, insbesondere für große Leitungsquerschnitte, mit einem mit Leitungsanschlüssen versehenen Klappengehäuse und einem darin zwischen zwei Endschaltstellungen in einem Schwenkwinkelbereich α von ca. 90° schwenkbaren Klappenflügel (7), der über eine Antriebswelle (10), einen daraufsitzenden Spannhebel (11) und eine einerseits mit dem Spannhebel (11) und andererseits annähernd mittig mit dem Klappenflügel (7) gelenkig verbundene Gelenkstange (12) antreibbar ist,
dadurch gekennzeichnet, daß
die Drehachse (16) der Antriebswelle (10) bzw. des Spannhebels (11) soweit von der Mitte des Leitungsquerschnitts des Leitungsanschlusses, den der Klappenflügel (7) in der Endschaltstellung mit eingefahrenem Spannhebel (11) verschließt, in Richtung zur Schwenkachse (15) des Klappenflügels (7) hin versetzt ist, daß der Drehwinkel β des Spannhebels (11) zwischen den beiden Endschaltstellungen des Klappenflügels (7) zwischen 90° und 150° beträgt.

2. Spannhebelklappe nach Anspruch 1,
dadurch gekennzeichnet, daß
der Drehwinkel β zwischen 125° und 130° beträgt.

3. Spannhebelklappe nach Anspruch 2,
dadurch gekennzeichnet, daß
der Abstand zwischen der Drehachse (16) des Spannhebels (11) und der Schwenkachse (15) des Klappenflügels (7) ca. 1/6 der lichten Nennweite (DN) des Leitungsquerschnittes beträgt.

4. Spannhebelklappe nach einem der vohergehenden Ansprüche,
dadurch gekennzeichnet, daß
der Spannhebel (11) und die Gelenkstange (12) annähernd die gleiche Länge aufweisen.

5. Spannhebelklappe nach einem der Ansprüche 1 bis 3,
dadurch gekennzeichnet, daß
der Spannhebel (11) länger als die Gelenkstange (12) ist.

6. Spannhebelklappe nach einem der vorhergehenden Ansprüche,
dadurch gekennzeichnet, daß
die Antriebswelle (10) durch zwei parallel zueinanderliegende, synchron und gegenläufig arbeitende Zylinder-Kolben-Einheiten (18, 19) über einen auf der Antriebswelle (10) sitzenden doppelarmigen Hebel (20) antreibbar ist.

## Claims

1. Tension lever flap valve, in particular for conduits having large cross section, comprising a flap housing being provided with conduit connections and a flap wing (7) swivelling between two end switch positions in an angle of traverse region α of approximately 90°, being drivable via a drive shaft (10), a tension lever (11) being positioned thereon, and a hinge rod (12) being on the one hand jointedly connected with the tension lever (11) and on the other hand approximately centered with the flap wing (7),
characterized in that
the axis of rotation (16) of the drive shaft (10) or the tension lever (11), respectively, is so far offset from the middle of the cross section of the conduit connection, which the flap wing (7) closes in the final switch position with the tension lever (11) being retracted, in the direction towards the axis of rotation (15) of the flap wing (7), that the angle of rotation β of the tension lever (11) between the two final switch positions of the flap wing (7) is between 90° and 150°.

2. Tension lever flap valve according to claim 1, characterized in that the angle of rotation β is between 125° and 130°.

3. Tension lever flap valve according to claim 2, characterized in that the distance between the axis of rotation (16) of the tension lever (11) and the axis of rotation (15) of the flap wing (7) is approximately 1/6 of the clear nominal width (DN) of the cross section of the conduit.

4. Tension lever flap valve according to one of the preceding claims, characterized in that the tension lever (11) and the hinge rod (12) have approximately the same length.

5. Tension lever flap valve according to one of claims 1 to 3, characterized in that the tension lever (11) is longer than the hinge rod (12).

6. Tension lever flap valve according to one of the preceding claims, characterized in that the drive shaft (10) is drivable through two cylinder-piston units (18, 19) being positioned in parallel to each other and operating synchronously and reversely via a two-armed lever (20) positioned on the drive shaft (10).

## Revendications

1. Dispositif d'obturation avec levier de serrage, notamment pour conduites avec grande section transversale, avec un boîtier muni de raccords de conduite et un volet (7) pivotant dans le boîtier entre deux positions finales de commutation dans une plage d'angle de rotation α d'environ 90°, volet qui peut être entraîné par un arbre d'entraînement (10), un levier de serrage (11) placé dessus et une barre articulée (12) reliée de façon articulée d'une part au levier de serrage (11) et d'autre part presque au milieu du volet (7), **caractérisé en ce que** l'axe de rotation (16) de l'arbre d'entraînement (10) ou du levier de serrage (11) est déplacé du milieu de la section de la conduite du raccord de conduite que le volet (7) ferme en position finale de commutation lorsque le levier de serrage (11) est rentré, en direction de l'axe de rotation (15) du volet (7), de telle sorte que l'angle de rotation β du levier de serrage (11) entre les deux positions finales de commutation du volet (7) est compris entre 90° et 150°.

2. Dispositif d'obturation avec levier de serrage selon la revendication 1, **caractérisé en ce que** l'angle de rotation β est compris entre 125° et 130°.

3. Dispositif d'obturation avec levier de serrage selon la revendication 2, **caractérisé en ce que** la distance entre l'axe de rotation (16) du levier de serrage (11) et l'axe de pivotement (15) du volet (7) est d'environ 1/6^{ème} de l'espace nominal libre (DN) de la section de la conduite.

4. Dispositif d'obturation avec levier de serrage selon l'une des revendications précédentes, **caractérisé en ce que** le levier de serrage (11) et la barre articulée (12) présentent presque la même longueur.

5. Dispositif d'obturation avec levier de serrage selon l'une des revendications 1 à 3, **caractérisé en ce que** le levier de serrage (11) est plus long que la barre articulée (12).

6. Dispositif d'obturation avec levier de serrage selon l'une des revendications précédentes, **caractérisé en ce que** l'arbre d'entraînement (10) peut être entraîné par deux unités cylindres-pistons (18, 19) parallèles, fonctionnant de façon synchrone et en sens inverse par l'intermédiaire d'un levier (20) à double bras situé sur l'arbre d'entraînement (10).
